# EUROPEAN PATENT APPLICATION

(11) **EP 4 801 102 A1**
(43) Date of publication of application: **02.09.2026**
(21) Application number: 24895624.5
(22) Date of filing: 28.06.2024
(51) Int. Cl.: H04W 28/04

(54) **WIRELESS COMMUNICATION METHOD, APPARATUS, STORAGE MEDIUM AND ELECTRONIC APPARATUS**

(30) Priority: 30.11.2023 CN 202311655823
(71) Applicant: ZTE CORPORATION, Shenzhen, Guangdong 518057 (CN)
(72) Inventor: LIU, Hanchao, Shenzhen, Guangdong 518057 (CN); DUAN, Xiangyang, Shenzhen, Guangdong 518057 (CN); XIE, Feng, Shenzhen, Guangdong 518057 (CN)
(74) Representative: Mozzi, Matteo
(86) International application number: PCT/CN2024/102451
(87) International publication number: WO 2025/112521

(57) **Abstract**

The embodiments of the present disclosure provides a wireless communication method, an apparatus, a storage medium and an electronic apparatus. The method comprises: receiving configuration information which is sent by a wireless configuration node and contains a target block error rate (BLER); and configuring the target BLER according to the configuration information.

## Description

### Cross-Reference to Related Application

The present disclosure is based on and claims priority to Chinese Patent Application No. CN 202311655823.3 filed on November 30, 2023, entitled "Wireless Communication Method, Apparatus, Storage Medium and Electronic Apparatus", the entire disclosure of which is incorporated herein by reference.

### Technical Field

Embodiments of the present disclosure relate to the field of communications, and in particular, to a wireless communication method, apparatus, storage medium and electronic apparatus.

### Background

In wireless communication technologies, a target Block Error Rate (BLER) plays a key role in guaranteeing communication quality and system performance. In the related art, for specific communication application scenarios, such as enhanced Mobile Broadband (eMBB) of Fifth Generation (5G) New Radio (NR) or Ultra-Reliable Low-Latency Communication (URLLC) of 5G NR, the target BLER is fixed and cannot be dynamically adjusted. However, a fixed target BLER that cannot be dynamically adjusted cannot optimally adapt to communication requirements, resulting in problems of resource waste and excessively low spectrum efficiency caused by setting the target BLER to an unreasonable fixed value.

No effective solution has been proposed for the above problems at present.

### Summary

The embodiments of the present disclosure provide a wireless communication method, apparatus, storage medium and electronic apparatus, so as to at least solve the problem of low spectrum efficiency in the related art caused by the fact that a fixed target BLER cannot optimally adapt to communication requirements.

According to one or more embodiments of the present disclosure, a wireless communication method is provided. The wireless communication method includes: receiving configuration information which is sent by a wireless communication node and contains a target Block Error Rate (BLER); and configuring the target BLER according to the configuration information.

In an exemplary embodiment, the target BLER is determined by the wireless communication node according to target information, wherein the target information includes at least one of: communication scenario requirement information, air interface state information, or Quality of Service (QoS) requirement information of a data service.

In an exemplary embodiment, in a case where the target information includes the communication scenario requirement information, the communication scenario requirement information includes at least one of: enhanced Mobile Broadband (eMBB) scenario requirement information, Ultra-Reliable Low-Latency Communication (URLLC) scenario requirement information, or massive Machine Type Communication (mMTC) scenario requirement information;
in a case where the target information includes the air interface state information, the air interface state information includes at least one of: Channel State Information (CSI), an air interface channel estimation matrix, eigenvalues and eigenvectors of the air interface channel estimation matrix, or singular values, a left singular matrix, and a right singular matrix of the air interface channel estimation matrix;
in a case where the target information includes the QoS requirement information of the data service, the QoS requirement information of the data service includes at least one of: a QoS of the data service, a rate requirement of the data service, a delay requirement of the data service, a jitter requirement of the data service, or a packet loss rate requirement of the data service.

According to another embodiment of the present disclosure, another wireless communication method is further provided. The wireless communication method includes: sending configuration information containing a target Block Error Rate (BLER) to a wireless device, so that the wireless device configures the target BLER according to the received configuration information.

In an exemplary embodiment, before sending the configuration information containing the target BLER to the wireless device, the wireless communication method further includes: determining the target BLER according to target information, wherein the target information includes at least one of: communication scenario requirement information, air interface state information, or Quality of Service (QoS) requirement information of a data service.

In an exemplary embodiment, in a case where the target information includes the communication scenario requirement information, the communication scenario requirement information includes at least one of: enhanced Mobile Broadband (eMBB) scenario requirement information, Ultra-Reliable Low-Latency Communication (URLLC) scenario requirement information, or massive Machine Type Communication (mMTC) scenario requirement information;
in a case where the target information includes the air interface state information, the air interface state information includes at least one of: Channel State Information (CSI), an air interface channel estimation matrix, eigenvalues and eigenvectors of the air interface channel estimation matrix, or singular values, a left singular matrix, and a right singular matrix of the air interface channel estimation matrix;
in a case where the target information includes the QoS requirement information of the data service, the QoS requirement information of the data service includes at least one of: a QoS of the data service, a rate requirement of the data service, a delay requirement of the data service, a jitter requirement of the data service, or a packet loss rate requirement of the data service

In an exemplary embodiment, determining the target BLER according to the target information includes: modeling a first mapping relation by using a first neural network, wherein the first mapping relation includes a mapping relation between the target information and the target BLER; and inputting the target information into the first neural network to obtain the target BLER output by the first neural network, wherein the first neural network is a trained model configured to predict the target BLER based on input information.

In an exemplary embodiment, in a case where the target information includes the air interface state information, inputting the target information into the first neural network includes: inputting the target information into a second neural network to obtain encoded target information output by the second neural network, wherein the second neural network is a trained model configured to encode input information; and inputting the encoded target information into the first neural network.

According to another embodiment of the present disclosure, a wireless communication apparatus is further provided. The wireless communication apparatus includes: a receiving module, configured to receive configuration information which is sent by a wireless communication node and contains a target BLER; and a configuration module, configured to configure the target BLER according to the configuration information.

According to another embodiment of the present disclosure, a wireless communication apparatus is provided. The wireless communication apparatus includes: a sending module, configured to send configuration information containing a target Block Error Rate (BLER) to a wireless device, so that the wireless device configures the target BLER according to the received configuration information.

According to another embodiment of the present disclosure, a Medium Access Control (MAC) entity is further provided, including the above wireless communication apparatus.

According to another embodiment of the present disclosure, a Radio Resource Control (RRC) entity is further provided, including the above wireless communication apparatus.

According to another embodiment of the present disclosure, a computer-readable storage medium is further provided, having stored therein a computer program, wherein the computer program is configured to, when executed by a processor, causes the processor to implement the operations in any of the above method embodiments.

According to another embodiment of the present disclosure, an electronic apparatus is further provided, including a memory and a processor, the memory having stored therein a computer program, the processor being configured to run the computer program to perform the operations in any of the above method embodiments.

### Brief Description of the Drawings

Fig. 1 is a block diagram of a hardware structure of a mobile terminal for implementing a wireless communication method according to one or more embodiments of the present disclosure.
Fig. 2 is a first flowchart of a wireless communication method according to one or more embodiments of the present disclosure.
Fig. 3 is a second flowchart of a wireless communication method according to one or more embodiments of the present disclosure.
Fig. 4 is a first structural block diagram of a wireless communication apparatus according to one or more embodiments of the present disclosure.
Fig. 5 is a second structural block diagram of a wireless communication apparatus according to one or more embodiments of the present disclosure.

### Detailed Description of the Embodiments

The embodiments of the present disclosure will be described in detail below with reference to the accompanying drawings.

It should be noted that the terms "first", "second", and the like in the description and claims of the present disclosure and in the above drawings are used for distinguishing similar objects and not necessarily for describing a specific sequence or chronological order.

Related technologies involved in the present disclosure are first described below.

In wireless communication technologies, the capacity of a wireless channel is constantly changing and uncertain. Therefore, the amount of information that can be correctly transmitted depends on the capacity of the wireless channel. Block Error Rate (BLER) refers to a ratio of the amount of data packets transmitted erroneously to the amount of total data packets transmitted within a certain time interval. BLER reflects the matching degree between the wireless channel capacity and the transmitted information amount to a great extent. To achieve a low BLER, a small amount of information can be loaded on spectrum resources, that is, the modulation order and code rate of transmitted data are reduced. In this way, a very low BLER or even zero BLER can be achieved. This approach is to make the transmitted information amount much smaller than the channel capacity so as to ensure a small BLER. However, this wastes the capacity of the wireless channel, that is, more spectrum resources are required to transmit the same amount of data, but spectrum resources are very precious and limited. On the other hand, if an information amount far exceeding the channel capacity is loaded on the spectrum resources, a large number of data packets will be transmitted erroneously. Since throughput and spectrum efficiency are calculated based on the correctly transmitted data amount or information amount, when a large number of data packets are erroneous, the throughput and spectrum efficiency will not be very high.

Maximizing spectrum efficiency is a constant goal pursued by wireless communications. In this case, the introduction of the target BLER is to ensure optimal spectrum efficiency. When the BLER is equal to the target BLER, the spectrum efficiency of data transmission is considered optimal. For example, the target BLER in an eMBB scenario is 0.1, that is, a ratio of the number of data packets transmitted erroneously to a total number of transmitted packets is 1:10. At this BLER, the spectrum efficiency is considered optimal, and spectrum efficiency is one of the most important goals in the eMBB scenario.

In addition, the target BLER can be used not only to guarantee spectrum efficiency but also to guarantee transmission delay and jitter. For example, the target BLER in a URLLC scenario is 10⁻⁵, that is, a ratio of data packets transmitted erroneously to a total number of transmitted packets is 1:10⁵. Such a low target BLER ensures that almost all transmitted data packets can be correctly demodulated, thus ensuring reliability, greatly reducing occurrence of retransmission, reducing delay and jitter of data transmission, and ensuring determinacy.

The target BLER plays a key role in wireless communications and guarantees communication quality and system performance.

However, in the related art, the target BLER is fixed and cannot be adjusted dynamically. That is, as described above, the target BLER in the eMBB scenario is fixed at 0.1, and the target BLER in the URLLC scenario is fixed at 10⁻⁵. The fixed target BLER that cannot be adjusted dynamically cannot optimally adapt to changing air interface wireless channels and service quality of service requirements. In particular, the target BLER in the URLLC scenario is manually set without sufficient verification, thereby causing resource waste due to excessively conservative target BLER. For example, if the BLER actually required by a specific service scenario is 0.01, reliability and determinacy cannot be guaranteed if the target BLER of 0.1 is selected, and resources are wasted to result in excessively low spectrum efficiency if the target BLER of 10⁻⁵ is selected.

In view of the above problems in the related art, corresponding solutions are proposed in embodiments of the present disclosure. In the embodiments of the present disclosure, the target BLER can be configured to maximize Spectrum Efficiency (SE).

The technical solution will be described as follows with reference to the embodiments of the present disclosure.

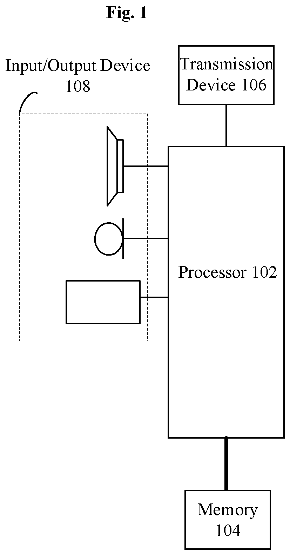

The method embodiments provided in the embodiments of the present application may be executed in a mobile terminal, a computer terminal, or a similar computing apparatus. Taking a mobile terminal as an example, Fig. 1 is a block diagram of a hardware structure of a mobile terminal for implementing a wireless communication method according to one or more embodiments of the present disclosure. As shown in Fig. 1, the mobile terminal may include one or more processors (only one is shown in Fig. 1) 102 (the processor 102 may include, but is not limited to, a processing apparatus such as a Micro Control Unit (MCU) or a Field Programmable Gate Array (FPGA)) and a memory 104 configured to store data. The mobile terminal may further include a transmission device 106 configured to implement a communication function and an input/output device 108. Those having ordinary skill in the art can understand that the structure shown in Fig. 1 is merely schematic and does not limit the structure of the mobile terminal. For example, the mobile terminal may further include more or fewer components than those shown in Fig. 1, or have a different configuration from that shown in Fig. 1.

The memory 104 may be configured to store computer programs, for example, software programs of application software and modules, such as computer programs corresponding to the wireless communication method in the embodiments of the present disclosure. The processor 102 executes various functional applications and data processing by running the computer programs stored in the memory 104, that is, implements the above method. The memory 104 may include a high-speed random access memory, and may further include a non-volatile memory, such as one or more magnetic storage devices, a flash memory, or other non-volatile solid-state memories. In some examples, the memory 104 may further include memories remotely arranged relative to the processor 102, and these remote memories may be connected to the mobile terminal via a network. Examples of the above network include, but are not limited to, the Internet, an enterprise intranet, a local area network, a mobile communication network, and a combination thereof.

The transmission device 106 is configured to receive or transmit data via a network. Examples of the above network may include a wireless network provided by a communication provider of the mobile terminal. In an example, the transmission device 106 includes a Network Interface Controller (NIC) configurable to be connected to other network devices via a base station to communicate with the Internet. In an example, the transmission device 106 may be a Radio Frequency (RF) module configured to communicate with the Internet in a wireless manner.

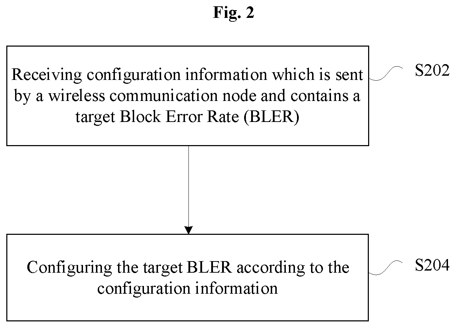

Fig. 2 is a first flowchart of a wireless communication method according to one or more embodiments of the present disclosure. As shown in Fig. 2, the flow includes the following operations S202 and S204.

In operation S202, configuration information which is sent by a wireless communication node and contains a target Block Error Rate (BLER) is received.

In operation S204, the target BLER is configured according to the configuration information.

In the above operations, the configuration information of the target BLER includes, but is not limited to, at least one of: configuration information of an uplink target BLER, configuration information of a downlink target BLER, or configuration information of a sidelink target BLER. A method for receiving the configuration information sent by the wireless communication node includes, but is not limited to: receiving the configuration information of the target BLER sent by the wireless communication node via Layer 3 (L3) signaling, wherein the L3 signaling includes, but is not limited to, a Radio Resource Control (RRC) message. The RRC message includes at least one of: an RRCSetup message, an RRCReconfiguration message, a ReconfigurationWithSync message, or system information. The system information includes, but is not limited to: System Information Block 1 (SIB1). The configuration information of the target BLER sent by the wireless communication node and received by the wireless device in an IDLE state or an INACTIVE state is contained in the system information. The configuration information of the target BLER sent by the wireless communication node and received by the wireless device in a CONNECTED state is contained in the RRCSetup message and/or the RRCReconfiguration message. The configuration information of the target BLER sent by the wireless communication node and received by the wireless device in a handover process is contained in the ReconfigurationWithSync message. The configuration information of the target BLER may be modified via higher-layer signaling, wherein the higher-layer signaling includes, but is not limited to: an RRCReconfiguration message. The wireless device and the wireless communication node perform data transmission by using the target BLER configured by the configuration information until the target BLER is reconfigured. Before receiving the configuration information, the wireless device performs data transmission by using the target BLER configured last time.

Through the above operations, the wireless communication node sends the configuration information of the target BLER, and then the target BLER is configured according to the received configuration information. Since the configured target BLER meets communication requirements, the purpose of flexibly configuring the BLER is achieved. Therefore, the problem of low spectrum efficiency in the related art caused by the fact that a fixed target BLER cannot optimally adapt to communication requirements is solved, and the spectrum efficiency is improved.

In an exemplary embodiment, the target BLER is determined by the wireless communication node according to target information, wherein the target information includes at least one of: communication scenario requirement information, air interface state information, or Quality of Service (QoS) requirement information of a data service.

In the above operations, the target information may include one or more of the communication scenario requirement information, the air interface state information, or the QoS requirement information of the data service. Of course, the target information may also include other information, such as a type of the wireless device. The target BLER includes, but is not limited to, at least one of: an uplink target BLER, a downlink target BLER, or a sidelink target BLER, wherein the uplink target BLER is used for uplink data transmission, the downlink target BLER is used for downlink data transmission, and the sidelink target BLER is used for sidelink data transmission.

In an exemplary embodiment, in a case where the target information includes the communication scenario requirement information, the communication scenario requirement information includes at least one of: enhanced Mobile Broadband (eMBB) scenario requirement information, Ultra-Reliable Low-Latency Communication (URLLC) scenario requirement information, or massive Machine Type Communication (mMTC) scenario requirement information; in a case where the target information includes the air interface state information, the air interface state information includes at least one of: Channel State Information (CSI), an air interface channel estimation matrix, eigenvalues and eigenvectors of the air interface channel estimation matrix, or singular values, a left singular matrix, and a right singular matrix of the air interface channel estimation matrix; in a case where the target information includes the QoS requirement information of the data service, the QoS requirement information of the data service includes at least one of: a QoS of the data service, a rate requirement of the data service, a delay requirement of the data service, a jitter requirement of the data service, or a packet loss rate requirement of the data service.

In the above operations, each piece of communication scenario requirement information is configured with a corresponding configurable range of the target BLER. A method for determining the configurable range of the target BLER includes, but is not limited to: determining the corresponding configurable range of the target BLER according to the communication scenario requirement information. The configurable ranges of the target BLER corresponding to different communication scenario requirements may be the same or different. For example, the configurable range of the target BLER corresponding to the eMBB scenario requirement information is greater than or equal to 0 and less than 1, the configurable range of the target BLER corresponding to the URLLC scenario requirement information is greater than or equal to 0 and less than or equal to 10⁻⁵; and the configurable ranges of the target BLER corresponding to the eMBB and URLLC scenario requirement information may both be greater than or equal to 0 and less than or equal to 10⁻⁵. A method for determining the target BLER includes, but is not limited to: further determining the target BLER or a range of the target BLER within the configurable range of the target BLER according to at least one of the air interface state information and the QoS requirement information of the data service. A method for determining the target BLER includes, but is not limited to: determining, by the wireless communication node, the uplink target BLER according to uplink communication scenario requirement information, uplink air interface state information, and uplink QoS requirement information of a data service; determining, by the wireless communication node, the downlink target BLER according to downlink communication scenario requirement information, downlink air interface state information, and downlink QoS requirement information of a data service; and determining, by the wireless communication node, the sidelink target BLER according to sidelink communication scenario requirement information, sidelink air interface state information, and sidelink QoS requirement information of a data service.

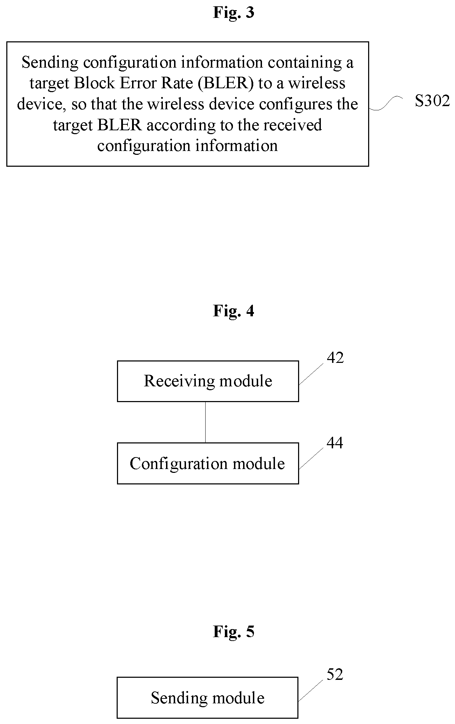

A wireless communication method running in the above network architecture is provided in the present embodiment. Fig. 3 is a second flowchart of a wireless communication method according to one or more embodiments of the present disclosure. As shown in Fig. 3, the flow includes the following operation S302.

In operation S302, configuration information containing a target Block Error Rate (BLER) is sent to a wireless device, so that the wireless device configures the target BLER according to the received configuration information.

In the above operations, the configuration information containing the target BLER is sent to the wireless device by a wireless communication node, and the wireless communication node includes, but is not limited to, at least one of: a base station, a radio access network, a wireless controller, or a network management system. The configuration information of the target BLER includes, but is not limited to, at least one of: configuration information of an uplink target BLER, configuration information of a downlink target BLER, and configuration information of a sidelink target BLER. A method for sending the configuration information containing the target BLER to the wireless device includes, but is not limited to: sending the configuration information of the target BLER to the wireless device via Layer 3 (L3) signaling, wherein the L3 signaling includes, but is not limited to: a Radio Resource Control (RRC) message. The RRC message includes at least one of: an RRCSetup message, an RRCReconfiguration message, a ReconfigurationWithSync message, or system information. The system information includes, but is not limited to: System Information Block 1 (SIB1). The configuration information of the target BLER received by the wireless device in an IDLE state or an INACTIVE state is contained in the system information; the configuration information of the target BLER received by the wireless device in a CONNECTED state is contained in the RRCSetup message and/or the RRCReconfiguration message; the configuration information of the target BLER received by the wireless device in a handover process is contained in the ReconfigurationWithSync message. The configuration information of the target BLER can be modified via higher-layer signaling, wherein the higher-layer signaling includes, but is not limited to: an RRCReconfiguration message.

Through the above operations, the configuration information of the target BLER is sent to the wireless device, so that the wireless device can configure the target BLER according to the received configuration information, thereby achieving the purpose of flexibly configuring the target BLER. Therefore, the problem of low spectrum efficiency in the related art caused by the fact that a fixed target BLER cannot optimally adapt to communication requirements can be solved, and an effect of improving the spectrum efficiency is achieved.

In an exemplary embodiment, before sending the configuration information containing the target BLER to the wireless device, the wireless communication method further includes: determining the target BLER according to target information, wherein the target information includes at least one of: communication scenario requirement information, air interface state information, or QoS requirement information of a data service.

In the above operations, the target information may include one or more of the communication scenario requirement information, the air interface state information, or the QoS requirement information of the data service. Of course, the target information may also include other information, such as a type of the wireless device. The target BLER includes, but is not limited to, at least one of: an uplink target BLER, a downlink target BLER, or a sidelink target BLER, wherein the uplink target BLER is used for uplink data transmission, the downlink target BLER is used for downlink data transmission, and the sidelink target BLER is used for sidelink data transmission.

Through the above operations, an appropriate target BLER is determined for the wireless device according to one or more of the communication scenario requirement information, the air interface state information, or the QoS requirement information of the data service included in the target information, thereby achieving the purpose of dynamically adjusting the target BLER, improving reliability and stability of data transmission, optimizing performance of a wireless communication system, and simultaneously achieving better utilization of network resources.

In an exemplary embodiment, in a case where the target information includes the communication scenario requirement information, the communication scenario requirement information includes at least one of: enhanced Mobile Broadband (eMBB) scenario requirement information, Ultra-Reliable Low-Latency Communication (URLLC) scenario requirement information, or massive Machine Type Communication (mMTC) scenario requirement information; in a case where the target information includes the air interface state information, the air interface state information includes at least one of: Channel State Information (CSI), an air interface channel estimation matrix, eigenvalues and eigenvectors of the air interface channel estimation matrix, or singular values, a left singular matrix, and a right singular matrix of the air interface channel estimation matrix; in a case where the target information includes the QoS requirement information of the data service, the QoS requirement information of the data service includes at least one of: a QoS of the data service, a rate requirement of the data service, a delay requirement of the data service, a jitter requirement of the data service, or a packet loss rate requirement of the data service.

In the above operations, each piece of communication scenario requirement information is configured with a corresponding configurable range of the target BLER. A method for determining the configurable range of the target BLER includes, but is not limited to: determining the corresponding configurable range of the target BLER according to the communication scenario requirement information. The configurable ranges of the target BLER corresponding to different communication scenario requirement information may be the same or different. For example, the configurable range of the target BLER corresponding to the eMBB scenario requirement information is greater than or equal to 0 and less than 1; the configurable range of the target BLER corresponding to the URLLC scenario requirement information is greater than or equal to 0 and less than or equal to 10⁻⁵; and the configurable ranges of the target BLER corresponding to the eMBB and URLLC scenario requirement information may both be greater than or equal to 0 and less than or equal to 10⁻⁵. A method for determining the target BLER includes, but is not limited to: further determining the target BLER or a range of the target BLER within the configurable range of the target BLER according to at least one of the air interface state information and the QoS requirement information of the data service. A method for determining the target BLER includes, but is not limited to: determining, by the wireless communication node, the uplink target BLER according to uplink communication scenario requirement information, uplink air interface state information, and uplink QoS requirement information of a data service; determining, by the wireless communication node, the downlink target BLER according to downlink communication scenario requirement information, downlink air interface state information, and downlink QoS requirement information of a data service; and determining, by the wireless communication node, the sidelink target BLER according to sidelink communication scenario requirement information, sidelink air interface state information, and sidelink QoS requirement information of a data service.

In an exemplary embodiment, determining the target BLER according to the target information includes: modeling a first mapping relation by using a first neural network, wherein the first mapping relation includes a mapping relation between the target information and the target BLER; and inputting the target information into the first neural network to obtain the target BLER output by the first neural network, wherein the first neural network is a trained model configured to predict the target BLER based on input information.

In the above operations, a method for determining the target BLER according to the target information includes, but is not limited to: determining, by the wireless communication node, the uplink target BLER according to one or more of the communication scenario requirement information, the air interface state information, or the QoS requirement information of the data service through the first mapping relation modeled by the first neural network; determining, by the wireless communication node, the downlink target BLER through the mapping relation, modeled by the first neural network, between one or more of the communication scenario requirement information, the air interface state information, or the QoS requirement information of the data service and the target BLER; and determining, by the wireless communication node, the uplink target BLER, the downlink target BLER, or the sidelink target BLER through the mapping relation, modeled by the first neural network, between one or more of the communication scenario requirement information, the air interface state information, or the QoS requirement information of the data service and the target BLER. The first neural network includes, but is not limited to, at least one of: a feedforward neural network, a convolutional neural network, or a recurrent neural network. The first neural network may be composed of one input layer, one output layer, and several (N ≥ 1) hidden layers, wherein the input layer, the output layer, and each hidden layer are respectively composed of one or more neuron nodes.

Through the above operations, the mapping relation between the target information and the target BLER is modeled by using a neural network model, and the target BLER is predicted by using the model, so that an accurate and efficient manner of estimating the target BLER is provided, thereby helping to optimize system design and improve performance. Through the trained neural network model, a corresponding target BLER prediction result can be quickly and accurately generated after the target information is input. In this way, time and resources can be saved, and decision accuracy can be improved.

In an exemplary embodiment, in a case where the target information includes the air interface state information, inputting the target information into the first neural network includes: inputting the target information into a second neural network to obtain encoded target information output by the second neural network, wherein the second neural network is a trained model configured to encode input information; and inputting the encoded target information into the first neural network.

In the above operations, the second neural network embeds one or more of the communication scenario requirement information, the air interface state information, or the QoS requirement information of the data service included in the target information into a D-dimensional (D ≥ 1) vector; the D-dimensional vector is input into an input layer of the first neural network, passes through N (N ≥ 1) hidden layers, and reaches the output layer, and the output layer can output a probability corresponding to each target BLER value. The wireless communication node may select the target BLER value with the highest probability as the target BLER value configured for the wireless device.

Through the description of the above embodiments, those having ordinary skill in the art can clearly understand that the wireless communication method according to the above embodiments can be implemented by means of software plus a necessary general-purpose hardware platform, and of course can also be implemented by hardware, but in many cases, the former is a better implementation manner. Based on such understanding, the technical solutions of the present disclosure essentially or the part contributing to the related art can be embodied in the form of a software product stored in a storage medium (such as ROM/RAM, magnetic disk, optical disc), including several instructions for enabling a terminal device (which may be a mobile phone, a computer, a server, a network device, or the like) to execute the wireless communication method according to various embodiments of the present disclosure.

A wireless communication apparatus provided in the present embodiment is configured to implement the above embodiments and exemplary implementations, and what has been described will not be repeated. As used below, the term "module" may be a combination of software and/or hardware implementing a predetermined function. Although the wireless communication apparatus described in the following embodiments is preferably implemented by software, implementation by hardware or a combination of software and hardware is also possible and conceivable.

Fig. 4 is a first structural block diagram of a wireless communication apparatus according to one or more embodiments of the present disclosure. As shown in Fig. 4, the wireless communication apparatus includes:
a receiving module 42, configured to receive configuration information which is sent by a wireless communication node and contains a target BLER; and
a configuration module 44, configured to configure the target BLER according to the configuration information.

In an exemplary embodiment, the target BLER is determined by the wireless communication node according to target information, wherein the target information includes at least one of: communication scenario requirement information, air interface state information, or QoS requirement information of a data service.

In an exemplary embodiment, in a case where the target information includes the communication scenario requirement information, the communication scenario requirement information includes at least one of: eMBB scenario requirement information, URLLC scenario requirement information, and mMTC scenario requirement information; in a case where the target information includes the air interface state information, the air interface state information includes at least one of: CSI, an air interface channel estimation matrix, eigenvalues and eigenvectors of the air interface channel estimation matrix, or singular values, a left singular matrix, and a right singular matrix of the air interface channel estimation matrix; in a case where the target information includes the QoS requirement information of the data service, the QoS requirement information of the data service includes at least one of: QoS of a data service, a rate requirement of the data service, a delay requirement of the data service, a jitter requirement of the data service, or a packet loss rate requirement of the data service.

Fig. 5 is a second structural block diagram of a wireless communication apparatus according to one or more embodiments of the present disclosure. As shown in Fig. 5, the wireless communication apparatus includes:
a sending module 52, configured to send configuration information containing a target Block Error Rate (BLER) to a wireless device, so that the wireless device configures the target BLER according to the received configuration information.

In an exemplary embodiment, the wireless communication apparatus further includes: a determining module, configured to determine the target BLER according to target information before sending the configuration information containing the target BLER to the wireless device, wherein the target information includes at least one of: communication scenario requirement information, air interface state information, or QoS requirement information of a data service.

In an exemplary embodiment, in a case where the target information includes the communication scenario requirement information, the communication scenario requirement information includes at least one of: eMBB scenario requirement information, URLLC scenario requirement information, and mMTC scenario requirement information; in a case where the target information includes the air interface state information, the air interface state information includes at least one of: CSI, an air interface channel estimation matrix, eigenvalues and eigenvectors of the air interface channel estimation matrix, or singular values, a left singular matrix, and a right singular matrix of the air interface channel estimation matrix; in a case where the target information includes the QoS requirement information of the data service, the QoS requirement information of the data service includes at least one of: QoS of a data service, a rate requirement of the data service, a delay requirement of the data service, a jitter requirement of the data service, or a packet loss rate requirement of the data service.

In an exemplary embodiment, the determining module includes: a modeling unit, configured to model a first mapping relation by using a first neural network, wherein the first mapping relation includes a mapping relation between the target information and the target BLER; and an input unit, configured to input the target information into the first neural network to obtain the target BLER output by the first neural network, wherein the first neural network is a trained model configured to predict the target BLER based on input information.

In an exemplary embodiment, in a case where the target information includes the air interface state information, the input unit includes: a first input subunit, configured to input the target information into a second neural network to obtain encoded target information output by the second neural network, wherein the second neural network is a trained model configured to encode input information; and a second input subunit, configured to input the encoded target information into the first neural network.

It should be noted that the above modules may be implemented by software or hardware. For the latter, the modules may be implemented by, but not limited to, the following manner: the above modules are all located in the same processor; or the above modules are respectively located in multiple processors in any combination.

The embodiments of the present disclosure further provide a Medium Access Control (MAC) entity, including the wireless communication apparatus shown in Fig. 4 or Fig. 5 above.

The embodiments of the present disclosure further provide a Radio Resource Control (RRC) entity, including the wireless communication apparatus shown in Fig. 4 or Fig. 5 above.

The embodiments of the present disclosure further provide a computer-readable storage medium having stored therein a computer program, wherein the computer program is configured to, when running on a processor, causes the processor to perform the operations in any of the above method embodiments.

In an exemplary embodiment, the above computer-readable storage medium may include, but is not limited to: a U disk, a Read-Only Memory (ROM), a Random Access Memory (RAM), a removable hard disk, a magnetic disk, an optical disc, or other various media capable of storing a computer program.

The embodiments of the present disclosure further provide an electronic apparatus including a memory and a processor, the memory having stored therein a computer program, the processor being configured to run the computer program to perform the operations in any of the above method embodiments.

In an exemplary embodiment, the above electronic apparatus may further include a transmission device and an input/output device, wherein the transmission device is connected to the above processor, and the input/output device is connected to the above processor.

For specific examples in the present embodiment, reference may be made to the examples described in the above embodiments and exemplary implementations, and details are not described herein again in the present embodiment.

Obviously, those having ordinary skill in the art should understand that the above modules or operations of the present disclosure can be implemented by a universal computing apparatus, can be centralized on a single computing apparatus, or distributed on a network composed of multiple computing apparatuses, can be implemented by program code executable by the computing apparatus, and thus can be stored in a storage apparatus and executed by the computing apparatus, and in some cases, the operations shown or described can be executed in an order different from that herein, or each of them is fabricated into individual integrated circuit modules, or multiple modules or operations thereof are fabricated into a single integrated circuit module. In this way, the present disclosure is not limited to any specific combination of hardware and software.

The above are only exemplary embodiments of the present disclosure and are not intended to limit the present disclosure. Various modifications and variations can be made to the present disclosure for those having ordinary skill in the art. Any modifications, equivalent replacements, improvements, and the like within the spirit and principle of the present disclosure shall fall within the scope of protection of the present disclosure.

## Claims

1. A wireless communication method, comprising:
receiving configuration information which is sent by a wireless communication node and contains a target Block Error Rate, BLER; and
configuring the target BLER according to the configuration information.

2. The wireless communication method according to claim 1, wherein
the target BLER is determined by the wireless communication node according to target information, wherein the target information comprises at least one of: communication scenario requirement information, air interface state information, or Quality of Service, QoS, requirement information of a data service.

3. The wireless communication method according to claim 2, wherein
in a case where the target information comprises the communication scenario requirement information, the communication scenario requirement information comprises at least one of: enhanced Mobile Broadband, eMBB, scenario requirement information, Ultra-Reliable Low-Latency Communication, URLLC, scenario requirement information, or massive Machine Type Communication, mMTC, scenario requirement information;
in a case where the target information comprises the air interface state information, the air interface state information comprises at least one of: Channel State Information, CSI, an air interface channel estimation matrix, eigenvalues and eigenvectors of the air interface channel estimation matrix, or singular values, a left singular matrix, and a right singular matrix of the air interface channel estimation matrix;
in a case where the target information comprises the QoS requirement information of the data service, the QoS requirement information of the data service comprises at least one of: a QoS of the data service, a rate requirement of the data service, a delay requirement of the data service, a jitter requirement of the data service, or a packet loss rate requirement of the data service.

4. A wireless communication method, comprising:
sending configuration information containing a target Block Error Rate, BLER, to a wireless device, so that the wireless device configures the target BLER according to the received configuration information.

5. The wireless communication method according to claim 4, wherein before sending the configuration information containing the target BLER to the wireless device, the wireless communication method further comprises:
determining the target BLER according to target information, wherein the target information comprises at least one of: communication scenario requirement information, air interface state information, or Quality of Service, QoS, requirement information of a data service.

6. The wireless communication method according to claim 5, wherein
in a case where the target information comprises the communication scenario requirement information, the communication scenario requirement information comprises at least one of: enhanced Mobile Broadband, eMBB, scenario requirement information, Ultra-Reliable Low-Latency Communication, URLLC, scenario requirement information, or massive Machine Type Communication, mMTC, scenario requirement information;
in a case where the target information comprises the air interface state information, the air interface state information comprises at least one of: Channel State Information, CSI, an air interface channel estimation matrix, eigenvalues and eigenvectors of the air interface channel estimation matrix, or singular values, a left singular matrix, and a right singular matrix of the air interface channel estimation matrix;
in a case where the target information comprises the QoS requirement information of the data service, the QoS requirement information of the data service comprises at least one of: a QoS of the data service, a rate requirement of the data service, a delay requirement of the data service, a jitter requirement of the data service, or a packet loss rate requirement of the data service.

7. The wireless communication method according to claim 5, wherein determining the target BLER according to the target information comprises:
modeling a first mapping relation by using a first neural network, wherein the first mapping relation comprises a mapping relation between the target information and the target BLER; and
inputting the target information into the first neural network to obtain the target BLER output by the first neural network, wherein the first neural network is a trained model configured to predict the target BLER based on input information.

8. The wireless communication method according to claim 7, wherein in a case where the target information comprises the air interface state information, inputting the target information into the first neural network comprises:
inputting the target information into a second neural network to obtain encoded target information output by the second neural network, wherein the second neural network is a trained model configured to encode input information; and
inputting the encoded target information into the first neural network.

9. A wireless communication apparatus, comprising:
a receiving module, configured to receive configuration information which is sent by a wireless communication node and contains a target BLER; and
a configuration module, configured to configure the target BLER according to the configuration information.

10. A wireless communication apparatus, comprising:
a sending module, configured to send configuration information containing a target Block Error Rate, BLER, to a wireless device, so that the wireless device configures the target BLER according to the received configuration information.

11. A Medium Access Control, MAC, entity, comprising the wireless communication apparatus according to claim 9 or the wireless communication apparatus according to claim 10.

12. A Radio Resource Control, RRC, entity, comprising the wireless communication apparatus according to claim 9 or the wireless communication apparatus according to claim 10.

13. A computer-readable storage medium having stored therein a computer program, wherein the computer program, when executed by a processor, causes the processor to implement operations of the wireless communication method according to any one of claims 1 to 3, or implement operations of the wireless communication method according to any one of claims 4 to 8.

14. An electronic apparatus, comprising a memory, a processor, and a computer program stored in the memory and executable on the processor, wherein the processor, when executing the computer program, implements operations of the wireless communication method according to any one of claims 1 to 3, or implements operations of the wireless communication method according to any one of claims 4 to 8.
